# EUROPÄISCHE PATENTSCHRIFT

(11) **EP 0 509 126 B1**
(45) Veröffentlichungstag und Bekanntmachung des Hinweises auf die Patenterteilung: **23.06.1999**
(21) Anmeldenummer: 91106338.6
(22) Anmeldetag: 19.04.1991
(51) Int. Cl.: G06F 15/16

(54) **Verfahren zur Vermittlung von Nachrichten an Zieladressen in einem mehrstufigen Netz aus Vermittlungselementen**
Message routing method towards target addresses in a multi-stage network through routing elements
Méthode de routage de messages vers des addresses de destination dans un réseau multi-niveau par des éléments de routage

(43) Veröffentlichungstag der Anmeldung: 21.10.1992
(73) Patentinhaber: SIEMENS AKTIENGESELLSCHAFT, 80333 München (DE)
(72) Erfinder: Hofestädt, Holm, Dr., W-8012 Riemerling (DE); Reyzl, Erwin, Dipl.-Math., W-8000 München 80 (DE)

(56) Entgegenhaltungen:
- EP-A- 0 369 146
- MICROPROCESSORS AND MICROSYSTEMS. Bd. 15, Nr. 1, Januar 1991, LONDON GB U. DE CARLINI: 'The routing problem in transputer-based parallel system'
- ELEKTRONISCHE DATENVERARBEITUNG. Bd. 29, Nr. 11, November 1987, BRAUNSCHWEIG DE Seiten 481 - 489; J. MILDE: 'Organisation gekoppelter M5PS-Teilsysteme'
- IBM TECHNICAL DISCLOSURE BULLETIN. Bd. 32, Nr. 9A, Februar 1990, NEW YORK US Seiten 355 - 356; 'Means for improving the performance of a combining network'
- COMPUTER NETWORKS Bd. 3, 1979, Seiten 267 - 286; P. KERMANI: 'Vrtual cut-through: A new computer communication switching technique'

## Beschreibung

Netzwerke zur Verbindung datenverarbeitender Systeme, insbesondere Parallelrechner-Verbindungsnetzwerke, werden üblicherweise aus einer Zahl gleichartiger Vermittlungselemente z.B. aus Kreuzschienenverteilern aufgebaut. Jedes dieser Vermittlungselemente ist für sich betrachtet blockierungsfrei, d.h. ein Vermittlungselement (Kreuzschienenverteiler) kann jede beliegige Verbindungspermutation seiner Eingänge mit seinen Ausgängen gleichzeitig schalten, ohne daß sich diese gegenseitig behindern. Netzwerke, die aus solchen Komponenten aufgebaut sind, haben diese Eigenschaft im allgemeinen nicht. Nur durch unvertretbar hohe Kosten und eine zentrale Steuerung des Netzwerkes, die nicht gewünscht ist, wäre dies zu erreichen.

Im folgenden werden nur Netzwerke betrachtet, die eine vollständig verteilte Steuerung besitzen. Die zu vermittelnden Nachrichten werden der Einfachheit halber als Pakete bezeichnet, welche jedoch eine variable Länge besitzen können. Jedes Paket besitzt einen sogenannten Header, der die Zieladresse dieses Paketes enthält. Einzig aufgrund dieser Information ordnet ein Vermittlungselement einem an einen beliebigen seiner Eingänge eintreffenden Paket einen Ausgang zu, über den das Paket den Schalter verläßt. Dieser Ausgang ergibt sich bei deterministischen Routing-Verfahren eindeutig aus der Zieladresse.

Aus der Veröffentlichung von Schicker P.:"Datenübertragung und Rechnernetze", B.G. Teubner Stuttgart 1983, Seiten 125 bis 141, ist ein deterministisches Routing-Verfahren dieser Art bekannt. Deterministische Routing-Verfahren sind jedoch nicht geeignet, Blockierungen innerhalb eines Netzes zuverlässig zu vermeiden.

Zu Blockierungen innerhalb des Netzes kann es kommen, wenn interne Kommunikationsengpässe bestehen. Solche Engpäße existieren für jede Netzwerktopologie, wenn ein deterministischer Routing-Algorithmus verwendet wird. Sie treten abhängig von der Kommunikationsstruktur des Anwenderprogramms auf und werden häufig zur Wurzel eines ganzen Baumes von sich aufstauende Nachrichten. Dieser wiederum kann selbst Nachrichten, die nicht über den Engpaß vermittelt werden sollen, blockieren. In ungünstigen Fällen wird dadurch der Gesamtdurchsatz des Netzwerkes um Größenordnungen reduziert.

Blockierte Pakete, d.h. Nachrichten, die nicht augenblicklich weitergeleitet werden können, weil kein geeigneter Ausgang an dem betreffenden Vermittlungselement zur Verfügung steht, werden in eine Warteschlange eingereiht. Hierdurch treten unerwünschte Verzögerungszeiten und als Folge eine Reduktion des Netzwerkdurchsatzes auf. Interne Kommunikationsengpässe können bei Verwendung bekannter Verfahren nur individuell für jede Anwendung durch eine Topologie abhängige Plazierung von Prozessen vermieden werden, was den Anwender eines Parallelrechnersystems zusätzlich belastet.

Blockierungen treten dann auf, wenn zwei oder mehr Pakete bzw. Nachrichten denselben Ausgang eines Vermittlungselements (Kreuzschienenverteilers) benötigen, um ihren Weg durch das Netz fortzusetzen. Bis auf ein Paket müssen alle anderen Pakete verzögert werden.

Von C. Clos, "A Study of Non Blocking Switching Networks", BSTJ, Vol.32 No. 2 1953, 406-424, wurde eine Klasse mehrstufiger Netze aus Vermittlungselementen beschrieben, welche in mehreren Stufen angeordnet sind und so verbunden sind, daß von jedem Eingang eines jeden Vermittlungselementes der ersten Stufe jede im Netz vorkommende Zieladresse durch Weiterleitung der Nachricht über die Zwischenstufen erreichbar ist. Die allgemeinsten Netze dieser Art haben die Eigenschaft, daß es in ihnen Vermittlungselemente gibt, welche derart in das Netz eingebunden sind, daß es Zieladressen gibt, die über mehrere Ausgänge solcher Vermittlungselemente erreichbar sind. Derartige Netze weisen eine beträchtliche Redundanz auf, weil zur Vermittluna mancher Nachrichten mehrere Ausgänge, unter Umständen eine große Zahl von Ausgängen eines Verrmittlungselementes zur Verfügung steht. Bei Verwendung eines deterministischen Routing Algorithmus zur Zuordnung von Ausgängen an Zieladressen kann diese Netzredundanz nur teilweise oder gar nicht genutzt werden. Hierdurch wird die Wahrscheinlichkeit von Blockierungen bei der Vermittlung von Nachrichten unnötig erhöht.

Der Erfindung liegt die Aufgabe zugrunde, ein Verfahren zur Vermittlung von Nachrichten anzugeben, bei welchem vorhandene Redundanzen im Vermittlungsnetzwerk so gut wie möglich mit Ziel der Reduzierung von Blockierungen ausgenutzt werden, wobei die Netze frei von Deadlocks bleiben sollen. Diese Aufgabe wird durch Verfahren zur Vermittlung von Nachrichten an Zieladressen in einem mehrstufigen Netz aus Vermittlungselementen mit Merkmalen nach einem der Ansprüche 1 oder 2 gelöst. Beide Verfahren setzen ein mehrstufiges Netz aus Vermittlungselementen voraus, indem es Vermittlungselemente gibt, die derart in das Netz eingebunden sind, daß es Zieladressen gibt, die über mehrere Ausgänge solcher Vermittlungselemente erreichbar sind. Solche Ausgänge werden im folgenden als redundante Ausgänge solcher Vermittlunaselemente bezeichnet. In solchen Netzwerken mit redundanten Ausgängen an bestimmten Vermittlungselementen ist die Verwendung eines deterministischen Routing-Verfahrens offensichtlich nicht optimal, da bei Verwendung eines deterministischen Routing-Verfahrens von der Redundanz der Vermittlungswege in einem solchen Netzwerk kein oder nur ungenügender Gebrauch gemacht wird.

Bei dem Verfahren nach Anspruch 1 wird ein lokal adaptiver Routing-Algorithmus verwendet, bei dem jeder Zieladresse an Vermittlungselementen mit mehreren Ausgängen für diese Zieladresse eine Gruppe dieser Ausgänge zugeordnet wird, und innerhalb dieser Gruppe ein freier Ausgang gesucht wird, über den die Nachricht weitergeleitet wird, und die Nachricht nur dann verzögert wird, wenn innerhalb dieser Gruppe kein Ausgang frei ist. Durch diese Vorgehensweise werden die Nachrichten nicht ausschließlich über einen durch die Zieladresse deterministisch vorgegebenen Vermittlungselementausgang weitergeleitet, sondern es werden zur Weiterleitung einer Nachricht alle zur Vermittlung dieser Nachricht geeigneten Ausgänge einer Vermittlungselementes in Betracht gezogen und innerhalb dieser Gruppe von Ausgängen ein freier Ausgang gesucht, über den die Nachricht weitergeleitet wird. Hierdurch wird die vorhandene Netzwerkredundanz unter Erhaltung der Deadlockfreiheit optimal ausgenutzt.

Bei dem Verfahren nach Anspruch 2 handelt es sich um einen zufallsgesteuerten Routing-Algorithmus, bei dem einer Zieladresse an Vermittlungselementen mit mehreren Ausgängen für diese Zieladresse eine Gruppe dieser Ausgänge zugeordnet wird und innerhalb dieser Gruppe der Zieladresse ein Ausgang zufällig zugeordnet wird, und die Nachricht verzögert wird, solange der ihr zugeordnete Ausgang nicht frei ist. Auch durch diese Vorgehensweise wird die im Netz vorhandene Redundanz ausgenutzt.

Vorteilhafte Weiterbildungen der Erfindung ergeben sich aus den Unteransprüche.

Ein besonders hoher Netzwerkdurchsatz läßt sich beispielsweise erzielen, wenn die Gruppe von redundanten Ausgängen die einer Zieladresse zugeordnet wird, alle redundanten Ausgänge des Vermittlungselements umfaßt. Weiterhin kann das Verfahren besonders vorteilhaft mit den bekannten Merkmalen des Intervall Routings nach den Ansprüchen 4 bzw. 5 kombiniert werden.

Figur 1 zeigt ein dreistufiges Netzwerk aus Vermittlungselementen der Größe 32.

Figur 2 zeigt verschiedene dreistufige Netzwerkkonfigurationen aus Vermittlungselementen der Größe 32.

Figur 3 zeigt verschiedene fünfstufige Netzwerkkonfigurationen.

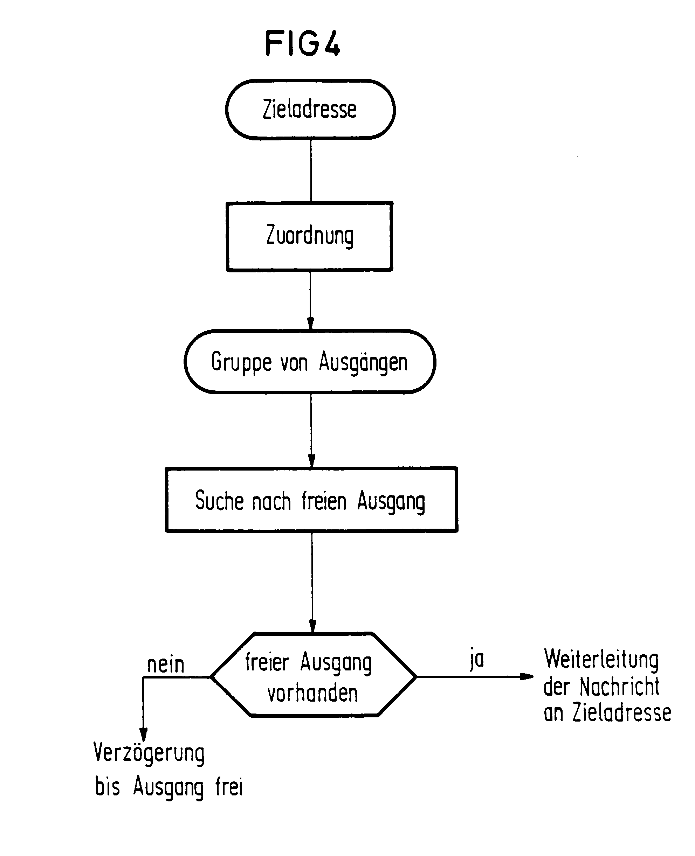

Figur 4 zeigt ein Ablaufdiagramm der lokal adaptiven Verfahrensvariante.

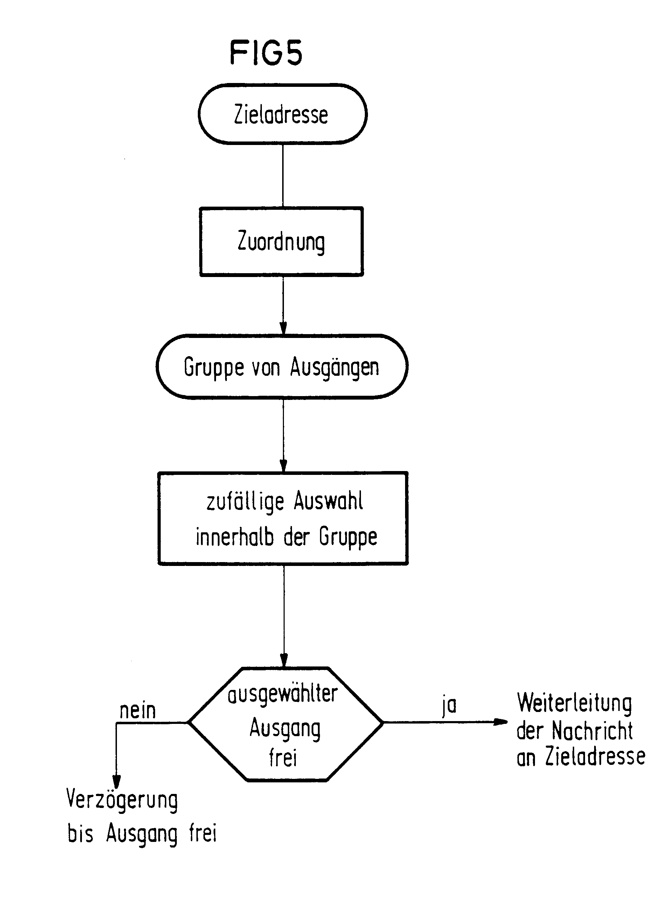

Figur 5 zeigt ein Ablaufdiagramm der zufallsgesteuerten Verfahrensvariante.

Figur 6 zeigt die Verwendung des Intervall-Routing Verfahrens am Beispiel eines Schalters.

Im folgenden wird das Verfahren anhand bevorzugter Ausführungsbeispiele und anhand der Figuren erläutert.

Zum besseren Verständnis der Erfindung wird die Struktur der Netze aus Vermittlungselementen erläutert, bevor die beiden Verfahrensvarianten anhand bevorzugter Ausführungsbeispiele beschrieben werden. Mehrstufige Netze zur Vermittlung von Nachrichten, wie sie der Erfindung zugrundeliegen, werden in der Veröffentlichung "A Study of Non Blocking Switching Networks", BSTJ, vol. 32, no.2, 1953; pp. 406-424 von C. Clos beschrieben. Diese Netze bestehen aus Vermittlungselementen, vorzugsweise Kreuzschienenverteilern, welche in mehreren Stufen angeordnet sind und untereinander so verbunden sind, daß von jedem Eingang eines jeden Vermittlungselements der ersten Stufe jede im Netz vorkommende Zieladresse durch Weiterleitung der Nachricht über die Zwischenstufen erreichbar ist.

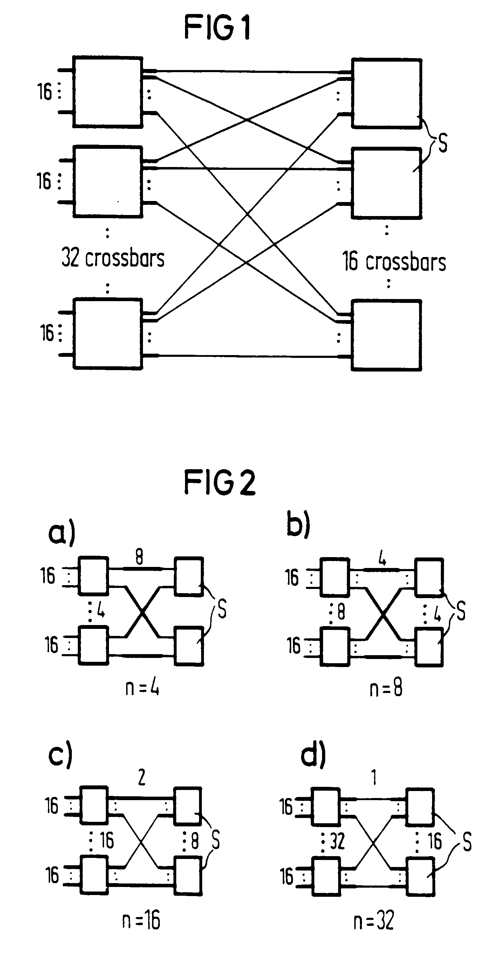

Figur 1 zeigt ein Beispiel für ein dreistufiges Netzwerk, bei dem die erste und die dritte Stufe des Netzwerks durch die Vermittlungselemente S in der linken Spalte der Figur 1 gegeben sind. In der linken Spalte von Figur 1 befinden sich 32 Kreuzschienenverteiler mit 32 bidirektionalen Anschlüssen, von denen in diesem Fall jeweils die Hälfte, also 16, mit den Nachrichten sendenden bzw. Nachrichten empfangenden Einheiten, z.B. eines Parallelrechnersystems verbunden sind, wogegen die andere Hälfte von bidirektionalen Anschlüssen mit den Vermittlungselementen S der rechten Spalte des Vermittlungsnetzes verbunden sind, derart, daß jedes Vermittlungselement der linken Spalte mit jedem Vermittlungselement der rechten Spalte verbunden ist. In dem in Figur 1 gezeigten Fall gibt es zwischen jedem Vermittlungselement der linken Spalte und jedem Vermittlungselement der rechten Spalte genau eine Verbindung. Eine Nachricht, welche durch einen beliebigen Anschluß auf der linken Seite der linken Spalte von Vermittlungselementen S dem Netz von Vermittlungselementen zugeführt wird, kann an ein beliebiges Vermittlungselement der zweiten Stufe weitergeleitet werden, weil aufgrund der speziellen Verbindungsstruktur die Nachricht von jedem Schalter der rechten Spalte an jede Zieladresse weitergeleitet werden kann. Durch anschließende Weiterleitung über ein Vermittlungselements der dritten Stufe, welch wiederum durch die linke Spalte realisiert wird, wird die Nachricht schließlich an ihre Zieladresse, mit welcher einer der Anschlüsse auf der linken Seite der linken Spalte von Vermittlungselementen verbunden ist, vermittelt werden.

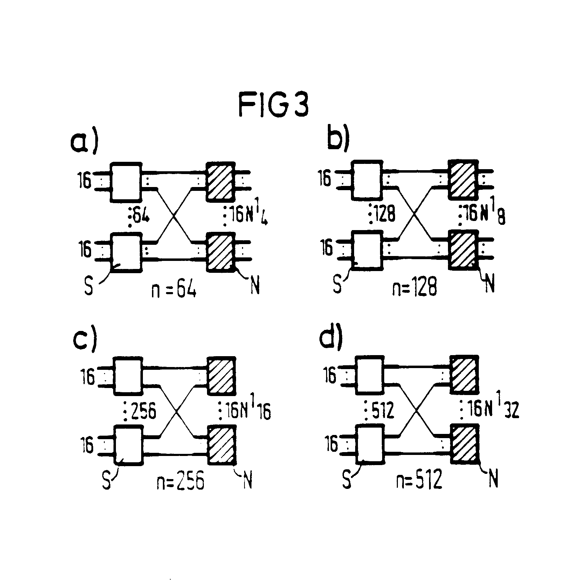

Figur 2 zeigt weitere dreistufige Netze aus Vermittlungselementen, bei denen jedes Vermittlungselement der linken Spalte über eine, zwei, vier oder acht Leitungen mit jedem Vermittlungselement der rechten Spalte verbunden ist. Figur 3 zeigt Beispiele für fünfstufige Netze aus Vermittlungselementen von der Art, wie sie in dem Aufsatz von C.Clos 1953, beschrieben sind.

Alle diese Netze haben die Eigenschaft, daß es in ihnen Vermittlungselemente gibt, welche derart in das Netz eingebunden sind, daß es Zieladressen gibt, die über mehrere Ausgänge solcher Vermittlungselemente erreichbar sind. Auf diese Weise liegt eine beträchtliche Redundanz in dem Netz vor. Bei Verwendung eines deterministischen Routing-Algorithmus zur Zuordnung von Ausgängen an Zieladressen kann diese Netzredundanz nur teilweise oder gar nicht genutzt werden, weil hier jeder Zieladresse genau ein Schalterausgang statisch zugeordnet ist. Bei Ausnutzung der Redundanz läßt sich die Wahrscheinlichkeit von Blockierungen bei der Vermittlung von Nachrichten erheblich verringern.

In der ersten Variante des Verfahrens, welche man als lokal adaptives Routing-Verfahren bezeichnen kann, muß ein Paket nicht mehr genau über einen Ausgang, welcher eindeutig durch seine Zieladresse gegeben ist, den Schalter verlassen, sondern wird einer Gruppe von Ausgängen zugeordnet. Enthält diese Gruppe einen freien Ausgang, so wird das Paket über diesen Ausgang weitergeleitet. Ist kein Ausgang innerhalb der Gruppe frei, wird die Nachricht verzögert. Dabei sind wiederum verschiedene Varianten möglich. Zum einen kann man die Nachricht solange verzögern, bis innerhalb der Gruppe irgendein Ausgang frei geworden ist und die Nachricht dann über diesen Ausgang weiterleiten. Eine andere Möglchkeit besteht darin, die Nachricht einem Ausgang innerhalb der Gruppe endgültig zuzuordnen und die Nachricht solange zu verzögern, bis dieser Ausgang frei geworden ist.

In einer anderen Variante des Verfahrens wird innerhalb der Gruppe von Ausgängen, welcher einer Zieladresse zugeordnet worden ist, nicht nach einem freien Ausgang gesucht, sondern es wird der Zieladresse ein Ausgang innerhalb der Gruppe zufällig zugeordnet. Ist dieser Ausgang frei, wird die Nachricht über ihn weitergeleitet, ansonsten wird die Nachricht verzögert bis der ihr zugeordnete Ausgang frei ist.

Bei beiden Verfahrensvarianten kann die Gruppe von Ausgängen, welcher eine Zieladresse zugeordnet wird, sämtliche Ausgänge umfassen, über welche diese Zieladresse erreichbar ist. Eine solche Wahl der Gruppe von Ausgängen ist besonders vorteilhaft, da sie von der Netzwerkredundanz in vollem Umfange Gebrauch macht. Bei den vorgestellten mehrstufigen Netzwerken ist diese Gruppe von Ausgängen für mehrere Zieladressen identisch. Daher ist es möglich, diese Zieladressen zu Teilmengen zusammenzufassen, und jeder dieser Teilmengen ihre Gruppe von Ausgängen zuzuordnen.

Für diese Zuordnung ist es vorteilhaft, das sog. Intervall-Routing zu verwenden, wie es in den Aufsätzen von J.van Leeuwen, R.B. Tan: Interval Routing; The Computer Journal, vol. 30, no. 4, 1987, pp. 298-307 und D.Pountain; Virtual Channels: The Next Generation of Transputers; BYTE, April 1990, Europe & World; 3- 12 April 1990, beschrieben ist. Hiernach wird die Menge aller Zieladressen als ein Adreßintervall dargestellt, abhängig von der Position des Schalters im Netzwerk in Teiladreßintervalle unterteilt und die Teilintervalle den Schalterausgängen zugeordnet. Darüber hinaus wird bei unserem Verfahren die Menge der Schalterausgänge als Ausgangsintervall dargestellt, in Ausgangsteilintervalle partitioniert, und jedem Adreßteilintervall anstatt eines einzelnen Ausgangs ein Ausgangsintervall zugeordnet.

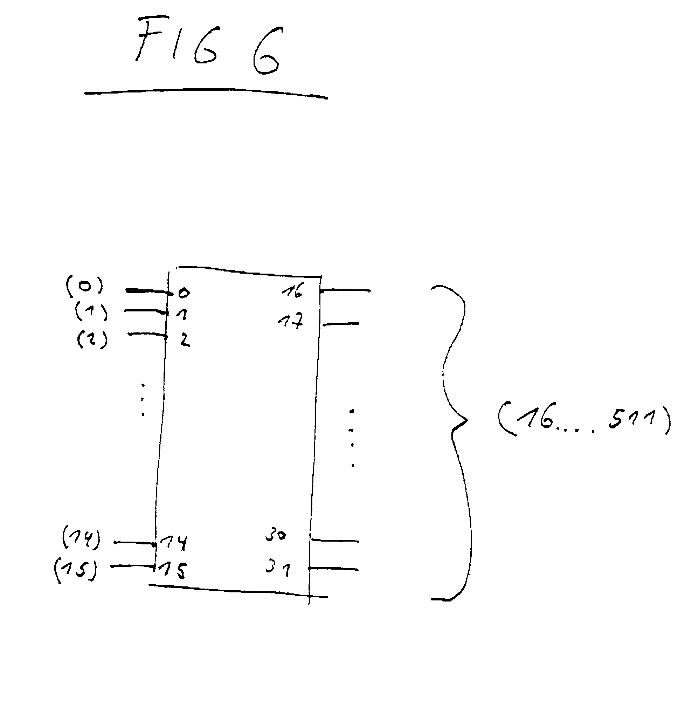

Diese Vorgehensweise wird anhand des dreistufigen Netzes aus Figur 1 präzisiert. Die Netzeingänge werden von oben nach unten fortlaufend numeriert und als Adreßintervall 0...511 dargestellt. Für das oberste Vermittlungselement der linken Spalte werden seine Ausgänge fortlaufend numeriert, von 0 bis 15 auf der linken Seite und 16 bis 31 auf der rechten Seite, und als Ausgangsintervall 0...31 dargestellt. Dieses Ausgangsintervall wird in 17 Teilintervalle partitioniert, wobei 16 Teilintervalle nur einen Ausgang umfassen und den linksseitigen Ausgängen entsprechen. Das 17. Teilintervall umfaßt alle rechtsseitigen Ausgänge. Die Partitionierung des Adreßintervalls 0...511 und die Zuordnung dieser Teilintervalle zu den Ausgangsteilintervallen ist der Figur 6 zu entnehmen.

Das zufallsgesteuerte Verfahren zur Vermittlung von Nachrichten kann speziell wie folgt realisiert werden:
Jedes Vermittlungselement besitzt einen Generator für Zufallsadressen aus einem frei wählbaren Intervall. Zusätzlich gibt es Flags an den Eingängen und Ausgängen der Vermittlungselemente. Läuft eine Nachricht in ein Vermittlungselement über einen Eingang mit gesetztem Flag ein, dann wird der Nachricht eine Zufallsadresse als zusätzliche Header vorangestellt. Die Routing-Entscheidung, d.h. die Zuordnung eines Ausgangs des Vermittlungselementes zu dieser Adresse erfolgt nun gemäß dieses Headers nach dem Intervall-Routing-Verfahren. Beim Verlassen des Vermittlungselementes wird der vorangestellte Header der Nachricht abgestreift, wenn das entsprechende Ausgangsflag gesetzt ist. Auf diese Weise läßt sich ein zufälliges Weiterleiten der Nachrichten erreichen.

## Patentansprüche

1. Verfahren zur Vermittlung von Nachrichten an Zieladressen in einem mehrstufigen Netz aus Vermittlungselementen, in dem es Vermittlungselemente gibt, die derart in das Netz eingebunden sind, daß es Zieladressen gibt, die über mehrere Ausgänge solcher Vermittlungselemente erreichbar sind, mit folgenden Merkmalen:
A) an Vermittlungselementen mit mehreren Ausgängen für mindestens eine Zieladresse wird jeder solchen Zieladresse eine Teilmenge aller Zieladressen und jeder dieser Teilmengen eine Gruppe von Ausgängen oder ein einzelner Ausgang zugeordnet;
B) diese Zuordnung geschieht, indem
B1) der Menge aller Zieladressen ein Adreßintervall zugeordnet wird, welches in Adreßteilintervalle unterteilt wird,
B2) der Menge aller Ausgänge ein Ausgangsintervall zugeordnet wird, welches in Ausgangsteilintervalle unterteilt wird, und
B3) jedem Adreßteilintervall ein Ausgangsteilintervall zugeordnet wird;
C) innerhalb dieser Gruppe wird ein freier Ausgang gesucht, über den die Nachricht weitergeleitet wird;
D) die Nachricht wird nur dann verzögert, wenn innerhalb dieser Gruppe kein Ausgang frei ist.

2. Verfahren zur Vermittlung von Nachrichten an Zieladressen in einem mehrstufigen Netz aus Vermittlungselementen, in dem es Vermittlungselemente gibt, die derart in das Netz eingebunden sind, daß es Zieladressen gibt, die über mehrere Ausgänge solcher Vermittlungselemente erreichbar sind, mit folgenden Merkmalen:
A) an Vermittlungselementen mit mehreren Ausgängen für mindestens eine Zieladresse wird jeder solchen Zieladresse eine Teilmenge aller Zieladressen und jeder dieser Teilmengen eine Gruppe von Ausgängen oder ein einzelner Ausgang zugeordnet;
B) diese Zuordnung geschieht, indem
B1) der Menge aller Zieladressen ein Adreßintervall zugeordnet wird, welches in Adreßteilintervalle unterteilt wird,
B2) der Menge aller Ausgänge ein Ausgangsintervall zugeordnet wird, welches in Ausgangsteilintervalle unterteilt wird, und
B3) jedem Adreßteilintervall ein Ausgangsteilintervall zugeordnet wird;
C) innerhalb dieser Gruppe wird dieser Zieladresse ein Ausgang zufällig zugeordnet, und
D) die Nachricht wird verzögert, solange der ihr zugeordnete Ausgang nicht frei ist.

3. Verfahren nach einem der vorhergehenden Ansprüche, bei dem die Gruppe von Ausgängen für jede Zieladresse alle Ausgänge umfaßt, über welche diese Zieladresse erreichbar ist.

4. Verfahren nach einem der vorhergehenden Ansprüche, bei dem jeder Zieladresse eine Teilmenge aller Zieladressen und jede dieser Teilmengen einer Gruppe von Ausgängen oder ein einzelner Ausgang zugeordnet wird.

## Claims

1. Procedure for switching messages to destination addresses in a multistage network of switching elements in which there are switching elements which are connected into the network in such a way that there are destination addresses which can be reached via several outputs of such switching elements, with the following characteristics:
A) at switching elements with several outputs for at least one destination address each such destination address is assigned a subset of all destination addresses and each of these subsets is assigned a group of outputs or a single output;
B) this assignment is achieved, in that
B1) an address interval, which is subdivided into address subintervals, is assigned to the set of all destination addresses,
B2) an output interval, which is subdivided into output subintervals, is assigned to the set of all outputs, and
B3) an output subinterval is assigned to each address subinterval;
C) within this group a free output is sought, through which the message is transmitted;
D) the message is then only delayed if there is no free output within this group.

2. Procedure for switching messages to destination addresses in a multistage network of switching elements in which there are switching elements which are connected into the network in such a way that there are destination addresses which can be reached via several outputs of such switching elements, with the following characteristics:
A) at switching elements with several outputs for at least one destination address each such destination address is assigned a subset of all destination addresses and each of these subsets is assigned a group of outputs or a single output;
B) this assignment is achieved, in that
B1) an address interval, which is subdivided into address subintervals, is assigned to the set of all destination addresses,
B2) an output interval, which is subdivided into output subintervals, is assigned to the set of all outputs, and
B3) an output subinterval is assigned to each address subinterval;
C) an output is assigned at random within this group to this destination address, and
D) the message is delayed as long as the output assigned to it is not free.

3. Procedure in accordance with one of the preceding claims whereby the group of outputs for each destination address covers all outputs through which this destination address can be reached.

4. Procedure in accordance with one of the preceding claims whereby each destination address is assigned a subset of all destination addresses and each of these subsets is assigned a group of outputs or a single output.

## Revendications

1. Procédé pour commuter des messages à des adresses de destination dans un réseau à plusieurs niveaux, constitué d'éléments de commutation, dans lequel il y a des éléments de commutation qui sont intégrés au réseau de telle manière qu'il y a des adresses de destination qui peuvent être atteintes par l'intermédiaire de plusieurs sorties d'éléments de commutation de ce genre, comportant les dispositions suivantes :
A) sur des éléments de commutation comportant plusieurs sorties pour au moins une adresse de destination, il est associé à chaque adresse de ce genre un sous-ensemble de toutes les adresses de destination et il est associé à chacun de ces sous-ensembles un groupe de sorties ou une sortie individuelle ;
B) cette association s'effectue :
B1) en associant à l'ensemble de toutes les adresses de destination un intervalle d'adresse, qui est subdivisé en sous-intervalles d'adresse,
B2) en associant à l'ensemble de toutes les sorties un intervalle de sortie, qui est subdivisé en sous-intervalles de sortie, et
B3) en associant à chaque sous-intervalle d'adresse un sous-intervalle de sortie ;
C) on cherche à l'intérieur de ce groupe une sortie libre par l'intermédiaire de laquelle le message est retransmis ;
D) le message n'est retardé que s'il n'y a pas de sortie de libre à l'intérieur de ce groupe.

2. Procédé pour commuter des messages à des adresses de destination dans un réseau à plusieurs niveaux, constitué d'éléments de commutation, dans lequel il y a des éléments de commutation qui sont intégrés au réseau de telle manière qu'il y a des adresses de destination qui peuvent être atteintes par l'intermédiaire de plusieurs sorties d'éléments de commutation de ce genre, comportant les dispositions suivantes :
A) sur des éléments de commutation ayant plusieurs sorties pour au moins une adresse de message, il est associé à chaque adresse de destination de ce genre un sous-ensemble de toutes les adresses de destination et il est associé à chacun de ces sous-ensembles un groupe de sorties ou une sortie individuelle ;
B) cette association s'effectue :
B1) en associant à l'ensemble de toutes les adresses de destination un intervalle d'adresse, qui est subdivisé en sous-intervalles d'adresse,
B2) en associant à l'ensemble de toutes les sorties un intervalle de sortie, qui est subdivisé en sous-intervalles de sortie, et
B3) en associant à chaque sous-intervalle d'adresse un sous-intervalle de sortie ;
C) à l'intérieur de ce groupe, une sortie est associée de manière aléatoire à cette adresse de destination , et
D) le message est retardé aussi longtemps que la sortie qui lui associée n'est pas libre.

3. Procédé suivant l'une des revendications précédentes, dans lequel le groupe de sorties pour chaque adresse de destination comprend toutes les orties par l'intermédiaire desquelles cette adresse de destination peut être atteinte.

4. Procédé suivant l'une des revendications précédentes, dans lequel il est associé à chaque adresse de destination un sous-ensemble de toute adresse de destination et il est associé à chacun de ces sous-ensembles un groupe de sorties ou une sortie individuelle.
